# EUROPÄISCHE PATENTSCHRIFT

(11) **EP 1 627 856 B1**
(45) Veröffentlichungstag und Bekanntmachung des Hinweises auf die Patenterteilung: **02.05.2012**
(21) Anmeldenummer: 05013074.9
(22) Anmeldetag: 17.06.2005
(51) Int. Cl.: C03B 9/347, C03B 9/353, C03B 9/38

(54) **Kühlvorrichtung für Fertigformhälften einer Glasmaschine**
Cooling device for the halves of a blow mould of a glass forming machine
Dispositif de refroidissement pour les demi-moules d'un moule finisseur d'une machine à façonner le verre

(30) Priorität: 20.08.2004 DE 102004040338
(43) Veröffentlichungstag der Anmeldung: 22.02.2006
(73) Patentinhaber: GPS GLASPRODUKTIONS-SERVICE GMBH, 45329 Essen (DE)
(72) Erfinder: Blaskowitz, Wolfgang, 45891 Gelsenkirchen (DE); Emrath, Norbert, 45721 Haltern (DE)
(74) Vertreter: Lelgemann, Karl-Heinz

(56) Entgegenhaltungen:
- EP-A- 0 400 774
- EP-A- 0 486 139
- EP-A- 0 576 745
- EP-A- 1 149 806
- EP-A- 1 473 281
- WO-A-97/39989
- US-A- 4 561 875
- US-A- 5 364 437

## Beschreibung

Die Erfindung bezieht sich auf eine Kühlvorrichtung für Fertigformhälften einer Glasmaschine nach dem Oberbegriff des Patentanspruchs 1.

Mittels derartiger Kühlvorrichtungen können die Fertigformhälften der Glasmaschine über den kompletten Weg, entlang dem sie bei dem mittels Fertigformhälften vorgenommenen Produktionsvorgang bewegt werden, kontinuierlich mit Kühlluft beaufschlagt werden. Durch die Ausgestaltung der Kühlluftzuleitung zur Kühlkammer als Teleskoprohr, dessen Enden in Kugelgelenklagerungen gehaltert sind, kann die Länge und die Orientierung des Teleskoprohrs jeweils an die Position der Kühlkammer in Bezug auf einen Stationskasten der Glasmaschine angepasst werden.

Aus der EP 0 576 745 A1 ist eine Kühlvorrichtung für Fertigformhälften einer Glasmaschine bekannt, bei der ein an beiden Enden in Kugelgelenklagerungen gehaltertes Teleskoprohr dazu dient, eine Kühlkammer mit Kühlluft zu versorgen. Aus der Kühlkammer heraus werden in der Fertigformhälfte ausgebildete Kühlkanäle mit Kühlluft beaufschlagt. Darüber hinaus ist die Kühlkammer Bestandteil der Andrückvorrichtung, mittels der die Fertigformhälften der Glasmaschine aufeinander zu bewegt und zusammengedrückt werden.

Aus der EP 1 149 806 A2 ist eine in wesentlichen Teilen mit der vorstehend beschriebenen Kühlvorrichtung übereinstimmende Kühlvorrichtung für eine mit einer Mündungsform versehene Vorform einer IS-Glasmaschine bekannt, wobei die dort beschriebene Kühlvorrichtung nur in ihrer Anwendung bei den Vorformen der IS-Glasmaschine beschrieben ist.

Die US 5 364 437 A zeigt eine Glasmaschine, bei der eine Kühlkammer mittels eines an ihrer Oberwand fixierten Bolzens mechanisch mit einer Andrückvorrichtung verbunden ist.

Der Erfindung liegt die Aufgabe zugrunde, die vorstehend geschilderte gattungsgemäße Kühlvorrichtung für Fertigformhälften gemäß der EP 0 576 745 A1 derart weiterzubilden, dass Fertigungstoleranzen und Abnutzungserscheinungen sowohl an der Kühlkammer als auch an der Fertigformhälfte so ausgeglichen werden, dass sie keinesfalls zu einer Beeinträchtigung der Kühlluftversorgung der Fertigformhälften führen.

Diese Aufgabe wird erfindungsgemäß dadurch gelöst, dass zwischen einem an der Eingangsseite der Kühlkanäle der Fertigformhälften angeordneten Abschnitt der Oberseite einer Oberwand der Kühlkammer und Einlassöffnungen der Kühlkanäle der Fertigformhälften ein schwimmend gelagerter Kühllufteinsatz mit Kühlluftschlitzen angeordnet ist, die eingangsseitig an Auslassöffnungen und ausgangsseitig an die Einlassöffnungen der Kühlkanäle der Fertigformhälften angeschlossen sind. Durch diesen schwimmend gelagerten Kühllufteinsatz und die in ihm vorgesehenen Kühlluftschlitze ist stets eine optimale Versorgung der Kühlkanäle der Fertigformhälften mit Kühlluft gesichert.

Die Kühlkammer ist als Druckschale eines Formenhalters der Fertigformhälfte ausgebildet. Die Kühlkammer der erfindungsgemäßen Kühlvorrichtung wird so ausgestaltet, dass sie neben ihrer Kühlfunktion darüber hinausgehend als Bestandteil des Formenhalters dient, um die dem jeweiligen Formenhalter zugeordneten Fertigformhälften an die Fertigformhälften des gegenüberliegenden Formenhalters anzudrücken. Darüber hinaus kann bei der Auslegung des Formenhalters berücksichtigt werden, dass mit der Kühlkammer der erfindungsgemäßen Kühlvorrichtung ein weiteres Druckelement in Form einer zusätzlichen Druckschale für die Fertigformhälften zur Verfügung steht.

Wenn die Kühlkammer als untere Druckschale des Formenhalters der Fertigformhälfte ausgebildet ist, kann in vorteilhafter Weise sichergestellt werden, dass die Kühlkanäle der Fertigformhälften durch an deren Unterseite befindliche Einlassöffnungen mit Kühlluft beaufschlagt werden, woraufhin die Strömungsrichtung der Kühlluft in vorteilhafter Weise einfach vertikal aufwärts verläuft.

Um eine möglichst exakte und kraftschlüssige Verbindung zwischen Kühlkammer und Formenhalter zu realisieren, ist die Kühlkammer der erfindungsgemäßen Kühlvorrichtung mittels eines einerseits an ihr und andererseits am Formenhalter angebrachten Formenhalterbolzens mit dem Formenhalter verbunden, wodurch sich eine starre Verbindung zwischen Kühlkammer und Formenhalter ergibt.

Zur festen und starren Anbringung dieses Formenhalterbolzens an der Kühlkammer ist es zweckmäßig, wenn der Formenhalterbolzen einen kühlkammerseitigen Montageflansch aufweist, der mittels Schraubverbindungen an der Innenfläche der Oberwand der Kühlkammer befestigt ist.

Die Unterwand der Kühlkammer kann vorteilhaft mittels einer Zwischenplatte zumindest teilweise ausgebildet sein, wobei diese Zwischenplatte den kühlkammerseitigen Abschluss der kühlkammerseitigen Kugelgelenklagerung bilden kann.

Wenn das Teleskoprohr mit seinem kühlkammerseitigen Ende zumindest teilweise in die Kühlkammer vorsteht, kann Kühlluft unmittelbar aus dem Teleskoprohr in die Kühlkammer gelangen, wobei auf zwischengeschaltete Leitungs- bzw. Kanalelemente verzichtet werden kann.

Der Eingriff zwischen dem schwimmend gelagerten Kühllufteinsatz einerseits und der Unterseite der Fertigformhälfte andererseits wird zweckmäßigerweise mittels eines an der Oberseite des Kühllufteinsatzes ausgebildeten Stegvorsprungs realisiert, der in eine an der Unterseite der Fertigformhälfte ausgebildete Aufnahmeausnehmung vorsteht.

Die schwimmende Lagerung des Kühllufteinsatzes in Bezug auf die Kühlkammer wird vorteilhaft dadurch erreicht, dass der Kühllufteinsatz mittels Schraubhalterungen auf der Oberseite der Oberwand der Kühlkammer gehaltert ist, wobei diese Schraubhalterungen ausreichend Spiel aufweisen, so dass der Kühllufteinsatz in Bezug auf die Kühlkammer schwimmend in einem vorgebbarem Ausmaß bewegbar ist.

Im folgenden wird die Erfindung anhand einer Ausführungsform unter Bezugnahme auf die Zeichnung näher erläutert.

Es zeigen:
- Figur 1: eine Ansicht von für die vorliegende Erfindung maßgeblichen Bereichen und Teilen einer mit einer erfindungsgemäßen Kühlvorrichtung versehenen Glas- maschine;
- Figur 2: eine Schnittdarstellung maßgeblicher Teile der in Figur 1 gezeigten erfindungsgemäßen Kühlvorrichtung; und
- Figur 3: eine Draufsicht auf den mit der erfindungsgemäßen Kühlvorrichtung versehenen Bereich der in Figur 1 gezeigten Glasmaschine.

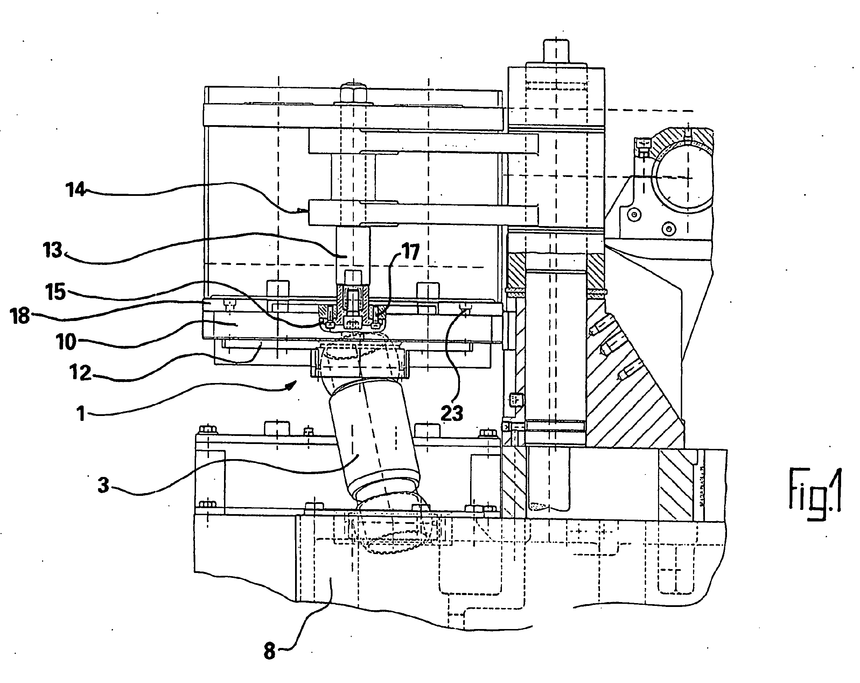

Eine anhand der Figuren 1 bis 3 im folgenden beschriebene Ausführungsform einer Kühlvorrichtung 1 dient dazu, Fertigformhälften 2 einer hinsichtlich ihrer für die vorliegende Erfindung wesentlichen Bestandteile dargestellten Glasmaschine über den kompletten Produktionsvorgang, der mittels der Fertigformhälften 2 realisiert wird, mit Kühlluft zu versorgen.

Zu der Kühlvorrichtung 1 gehört ein Teleskoprohr 3, das aus einem ersten Teleskoprohrteil 4 und einem zweiten Teleskoprohrteil 5 besteht. Beide Teleskoprohrteile 4, 5 sind mit ihrem freien Ende jeweils in einer Kugelgelenklagerung 6 bzw. 7 verschwenkbar gehaltert.

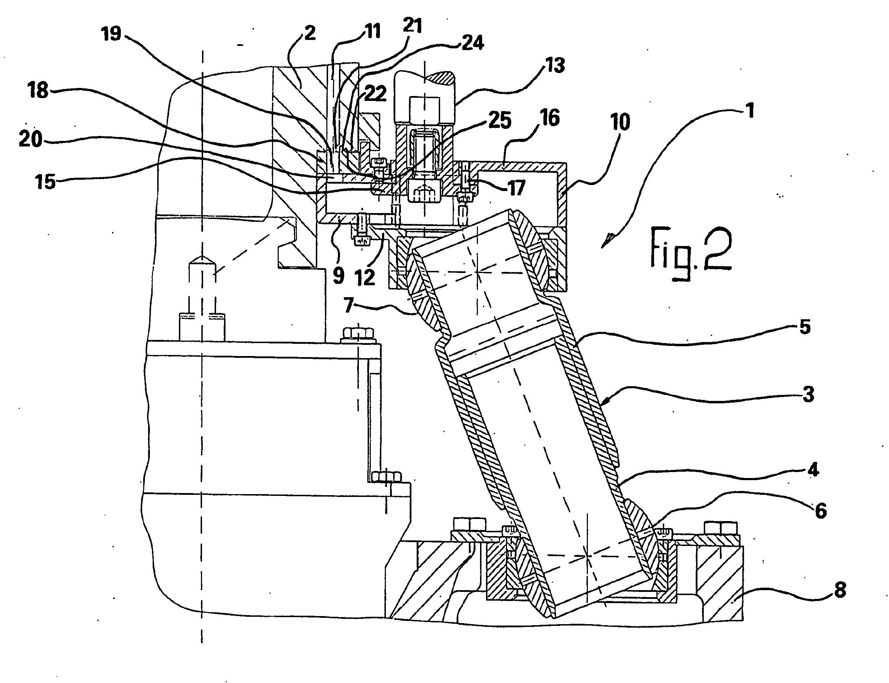

Das in Figur 2 untere Teleskoprohrteil 4 ist mittels der Kugelgelenklagerung 6 an einem Stationskasten 8 der Glasmaschine gehaltert, aus dem heraus die Kühlvorrichtung 1 mit Kühlluft für die Fertigformhälften 2 versorgt wird.

Das in Figur 2 obere Teleskoprohrteil 5 ist mittels der Kugelgelenklagerung 7 an der Unterseite bzw. Unterwand 9 einer Kühlkammer 10 beweglich gelagert. Aus der Kühlkammer 10 heraus werden in der Fertigformhälfte 2 ausgebildete, im dargestellten Ausführungsbeispiel etwa in Vertikalrichtung verlaufende Kühlkanäle 11 mit der aus dem Stationskasten 8 stammenden Kühlluft versorgt.

Die Teleskoprohrteile 4, 5 sind an ihren kugelgelenklagerungsfernen Enden in einem längs verstellbaren Eingriff, so dass die Gesamtlängsabmessung des Teleskoprohrs 3 an eine sich ändernde Position der Kühlkammer 10 angepasst werden kann. Aufgrund der Anpassungsfähigkeit des Teleskoprohrs 3 hinsichtlich seiner Länge sowie der beweglichen Lagerung der Teleskoprohrteile 4, 5 in den Kugelgelenklagerungen 6, 7 ist quasi während der gesamten im Produktionsprozess stattfindenden Bewegungen der Kühlkammer 10 in Bezug auf den Stationskasten 8 eine kontinuierliche Beaufschlagung der Kühlkammer 10 mit Kühlluft aus dem Stationskasten 8 und damit eine kontinuierliche Beaufschlagung der Kühlkanäle 11 der Fertigformhälfte 2 möglich.

Mittels der kühlkammerseitigen Kugelgelenklagerung 7 ist das Teleskoprohr 3 so an der Kühlkammer 10 gehaltert, dass es mit seinem kühlkammerseitigen Ende zumindest teilweise in die Kühlkammer 10 vorsteht. Kühlluft strömt somit aus dem Teleskoprohr 3 direkt in die Kühlkammer 10. Entsprechend ragt das Teleskoprohr mit seinem stationskastenseitigen Ende zumindest teilweise in den Stationskasten 8, so dass Kühlluft unmittelbar aus dem Stationskasten 8 in das Teleskoprohr 3 eintritt.

Die kühlkammerseitige Kugelgelenklagerung 7 wird zur Kühlkammer 10 hin durch eine Zwischenplatte 12 abgeschlossen, die im dargestellten Ausführungsbeispiel teilweise die Unterwand 9 der Kühlkammer 10 bildet.

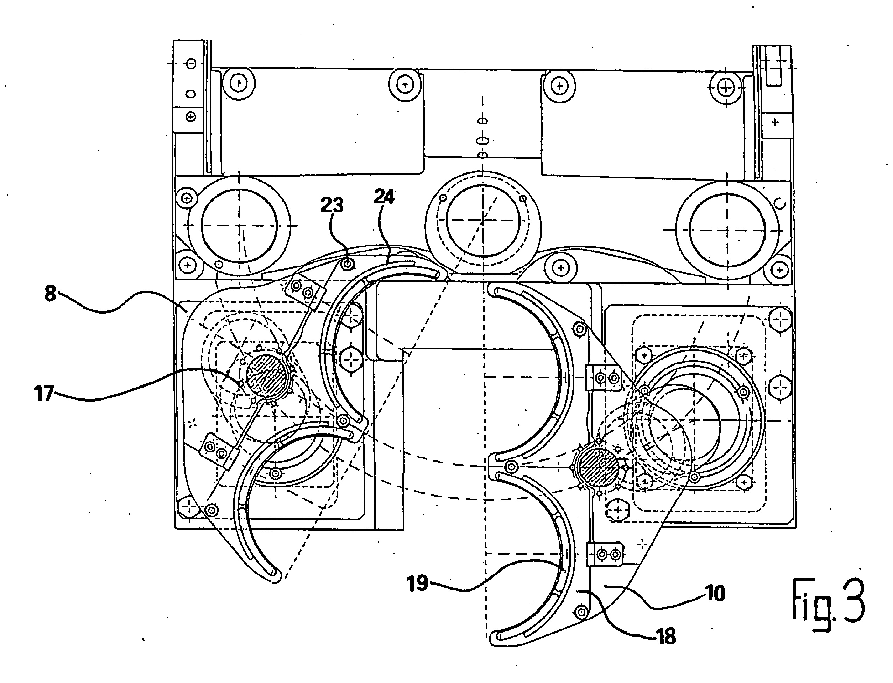

Wie sich insbesondere aus den Figuren 1 und 2 ergibt, ist die Kühlkammer 10 über einen Formenhalterbolzen 13 fest mit einem Formenhalter 14 der in Figur 1 und 3 zwei Fertigformhälften 2 verbunden.

Die Kühlkammer 10 der Kühlvorrichtung 1 dient somit außer als Bestandteil der Kühlvorrichtung 1 zusätzlich als untere Druckschale 10 des Formenhalters 14, mittels dem die Fertigformhälften 2 gegen die ihnen zugeordneten Fertigformhälften des gegenüberliegenden Formenhalters angedrückt werden.

Der Formenhalterbolzen 13 hat einen kühlkammerseitigen Montageflansch 15, mit dem der Formenhalterbolzen 13 unterhalb einer Oberwand 16 der Kühlkammer 10 in den Innenraum der Kühlkammer 10 vorsteht. Der Montageflansch 15 ist mittels Schraubverbindungen 17 fest an die Unterseite der Oberwand 16 der Kühlkammer 10 angeschraubt, so dass mittels des Formenhalterbolzens 13 vom Formenhalter 14 auf diesen ausgeübte Kräfte direkt und vollständig auf die Kühlkammer 10 übertragen werden. Die Kühlkammer 10 wird somit mit derselben Andruckkraft wie die anderen mittels des Formenhalters 14 betätigten Andruckschalen gegen die Fertigformhälften 2 angepresst.

Auf dem Bereich der Oberwand 16 der Kühlkammer 10, der von der Fertigformhälfte 2 bzw. den Fertigformhälften 2 überlagert wird, ist ein Kühllufteinsatz 18 schwimmend gelagert. Der Kühllufteinsatz 18 hat im dargestellten Ausführungsbeispiel für jede Fertigformhälfte 2 drei Kühlluftschlitze 19, die eingangsseitig an in der Oberwand 16 der Kühlkammer 10 ausgebildete Auslassöffnungen 20 und ausgangsseitig an in der Unterseite der Fertigformhälften 2 ausgebildete Einlassöffnungen 21 der Kühlkanäle 11 der Fertigformhälften 2 angeschlossen sind. Durch diese Kühlluftschlitze 19 gerät Kühlluft aus der Kühlkammer 10 in die Kühlkanäle 11 der Fertigformhälften 2.

Die schwimmende Lagerung des Kühllufteinsatzes 18 an der Oberseite der Oberwand 16 sowie der Unterseite 22 der Fertigformhälften 2 wird wie folgt realisiert:

Zwischen dem Kühllufteinsatz 18 und der Oberwand 16 sind Schraubhalterungen 23 vorgesehen, die den Kühllufteinsatz 18 mit Spiel durchgreifen, so dass der Kühllufteinsatz 18 in Bezug auf die Oberwand 16 der Kühlkammer 10 in einem vorgebbaren Ausmaß verschieblich ist.

Auf seiner der Unterseite 22 der Fertigformhälften 2 zugewandten Oberseite hat der Kühllufteinsatz 18 zwei Stegvorsprünge 24, von denen jeder einer Fertigformhälfte 2 zugeordnet ist und in einer in der Unterseite 22 der jeweiligen Fertigformhälfte 2 ausgebildeten Aufnahmeausnehmung 25 aufgenommen ist bzw. in diese Aufnahmeausnehmung 25 vorsteht. Bei der in Figur 2 gezeigten Ausführungsform der Kühlvorrichtung 1 bzw. der Fertigformhälfte 2 geht diese dem Stegvorsprung 24 zugeordnete Aufnahmeausnehmung 25 in den Kühlkanal 11 über.

Aufgrund der schwimmenden Lagerung des Kühllufteinsatzes 18 zwischen der Oberwand 16 der Kühlkammer 10 einerseits und der Unterseite 22 der Fertigformhälfte 2 andererseits ist stets eine optimale Anpassung der Position des Kühllufteinsatzes 18 sowohl an die Kühlkammer 10 als auch an die Fertigformhälfte 2 realisierbar, wodurch Fertigungstoleranzen bei der Herstellung der einzelnen Bauteile in optimaler Weise ausgeglichen werden können. Der aufgrund seiner Funktion besonderem Verschleiß unterzogene Kühllufteinsatz 18 kann ausgetauscht werden, ohne dass weitere Bestandteile der Kühlvorrichtung 1 ebenfalls ausgetauscht werden müssten. Darüber hinaus kann bei ein und derselben Kühlkammer 10 die Verwendung unterschiedlicher Kühllufteinsätze 18 in Betracht gezogen werden, wodurch ein und dieselbe Kühlkammer 10 bei unterschiedlichen Fertigformhälften eingesetzt werden kann.

Die vorstehend geschilderte Kühlvorrichtung 1 wird mittels einer Maschinensteuerung der Glasmaschine hinsichtlich der Ein- und Abschaltzeit der Kühlung gesteuert. Die Maschinensteuerung steuert und regelt über spezielle Ventile die Freigabezeiten der Kühlluft aus dem Stationskasten 8 zur Kühlvorrichtung 1 bzw. zu deren Teleskoprohr 3 hin. Hierdurch kann eine individuelle, artikelspezifische und produktionsnahe Regelung erzielt werden.

## Patentansprüche

1. Kühlvorrichtung für Fertigformhälften (2) einer Glasmaschine, mit einem an beiden Enden in Kugelgelenklagerungen (6, 7) gehalterten Teleskoprohr (3), einer Kühlkammer (10) die mittels des Teleskoprohrs (3) mit Kühlluft versorgbar ist und aus der Kühlkanäle (11) der Fertigformhälfte (2) mit Kühlluft beaufschlagbar sind und die als Druckschale (10) eines Formenhalters (14) der Fertigformhälfte (2) ausgebildet ist, **dadurch gekennzeichnet, dass** zwischen einem an der Eingangsseite der Kühlkanäle (11) der Fertigformhälften (2) angeordneten Abschnitt der Oberseite einer Oberwand (16) der Kühlkammer (10) und Einlassöffnungen (21) der Kühlkanäle (11) der Fertigformhälften (2) ein schwimmend gelagerter Kühllufteinsatz (18) mit Kühlluftschlitzen (19) angeordnet ist, die eingangsseitig an Auslassöffnungen (20) der Kühlkammer (10) und ausgangsseitig an die Einlassöffnungen (21) der Kühlkanäle (11) der Fertigformhälften (2) angeschlossen sind.

2. Kühlvorrichtung nach Anspruch 1, deren Kühlkammer (10) als untere Druckschale (10) des Formenhalters (14) der Fertigformhälfte (2) ausgebildet ist.

3. Kühlvorrichtung nach Anspruch 1 oder 2, deren Kühlkammer (10) mittels eines einerseits an der Kühlkammer (10) und andererseits am Formenhalter (14) angebrachten Formenhalterbolzens (13) mit dem Formenhalter (14) verbunden ist.

4. Kühlvorrichtung nach Anspruch 3, deren Formenhalterbolzen (13) einen kühlkammerseitigen Montageflansch (15) aufweist, der mittels Schraubverbindungen (17) an der Innenfläche der Oberwand (16) der Kühlkammer (10) befestigt ist.

5. Kühlvorrichtung nach einem der Ansprüche 1 bis 4, bei der die kühlkammerseitige Kugelgelenklagerung (7) eine Zwischenplatte (12) aufweist, die zumindest teilweise die Unterwand (9) der Kühlkammer (10) bildet.

6. Kühlvorrichtung nach einem der Ansprüche 1 bis 5, bei der das Teleskoprohr (3) mit seinem kühlkammerseitigen Ende zumindest teilweise in die Kühlkammer (10) vorsteht.

7. Kühlvorrichtung nach einem der Ansprüche 1 bis 6, bei der der schwimmend gelagerte Kühllufteinsatz (18) mittels eines an seiner Oberseite ausgebildeten Stegvorsprungs (14) in eine an der Unterseite (22) der Fertigformhälfte (2) ausgebildete Aufnahmeausnehmung (25) vorsteht.

8. Kühlvorrichtung nach einem der Ansprüche 1 bis 7, bei der der Kühllufteinsatz (18) mittels Schraubhalterungen (23) auf der Oberseite der Oberwand der Kühlkammer (10) gehaltert ist, wobei diese Schraubhalterungen (23) ausreichend Spiel aufweisen, so dass der Kühllufteinsatz (18) in Bezug auf die Kühlkammer (10) schwimmend in einem vorgebbaren Ausmaß bewegbar ist.

## Claims

1. A cooling device for finish mold halves (2) of a glass forming machine, comprising a telescopic tube (3) supported on both ends in ball joints (6, 7), a cooling chamber (10) which can be supplied with cooling air by means of the telescopic tube (3) and from which cooling channels (11) of the finish mold half (2) can be acted upon with cooling air and which is configured as a pressure shell (10) of a mold holder (14) of the finish mold (2), **characterized in that** between a section of the upper side of an upper wall (16) of the cooling chamber (10), said section being arranged on the input side of the cooling channels (11) of the finish mold halves (2), and inlet openings (21) of the cooling channels (11) of the finish mold halves (2), a floatingly mounted cooling air insert (18) with cooling air slots (19) is arranged, said cooling air slots being connected on the input side to outlet openings (20) of the cooling chamber (10) and on the output side to the inlet openings (21) of the cooling channels (11) of the finish mold halves (2).

2. The cooling device according to claim 1, the cooling chamber (10) of which is configured as a lower pressure shell (10) of the mold holder (14) of the finish mold half (2).

3. The cooling device according to claim 1 or claim 2, the cooling chamber (10) of which is connected to the mold holder (14) by means of a mold holder pin (13) which is attached on the one side on the cooling chamber (10) and on the other side on the mold holder (14).

4. The cooling device according to claim 3, the mold holder pin (13) of which has on the cooling chamber side a mounting flange (15) which is fastened by means of screw connections (17) to the inner surface of the upper wall (16) of the cooling chamber (10).

5. The cooling device according to any one of the claims 1 to 4, wherein the ball joint (7) on the cooling chamber side has an intermediate plate (12) which at least partially forms the lower wall (9) of the cooling chamber (10).

6. The cooling chamber according to any one of the claims 1 to 5, wherein the telescopic tube (3) with its end located on the cooling chamber side protrudes at least partially into the cooling chamber (10).

7. The cooling device according to any one of the claims 1 to 6, wherein the floatingly mounted cooling air insert (18) protrudes by means of a web projection (14) formed on its upper side into a receptacle opening (25) formed on the lower side (22) of the finish mold half (2).

8. The cooling device according to any one of the claims 1 to 7, wherein the cooling air insert (18) is fastened by means of screw fastenings (23) on the upper side of the upper wall of the cooling chamber (10), wherein said screw fastenings (23) have sufficient play so that the cooling air insert (18) is floatingly movable relative to the cooling chamber (10) to a predeterminable extent.

## Revendications

1. Dispositif de refroidissement pour moitiés de moule finisseur (2) d'une machine à fabriquer le verre, comportant un tube télescopique (3) maintenu aux deux extrémités dans des paliers à joint à rotule (6,7), une chambre de refroidissement (10), qui peut être alimentée en air de refroidissement au moyen du tube télescopique (3) et qui peut être sollicitée avec de l'air de refroidissement à partir des canaux de refroidissement (11) des moitiés de moule finisseur (2) et qui est réalisée comme une coque pressurisée (10) d'un teneur de moule (14) des moitiés de moule finisseur, **caractérisé en ce que** entre une portion disposée sur le côté d'entrée des canaux de refroidissement (11) des moitiés de moule finisseur (2) de la face supérieure d'une paroi supérieure (26) de la chambre de refroidissement (10) et des ouvertures d'admission (21) des canaux de refroidissement (11) des moitiés de moule finisseur, un insert d'air de refroidissement (18) positionné de manière flottante avec des fentes d'air de refroidissement (19) est disposé, lequel est raccordé du côté d'entrée aux ouvertures d'échappement (20) de la chambre de refroidissement (10) et du côté de sortie aux ouvertures d'admission (21) des canaux de refroidissement (11) des moitiés de moule finisseur (2).

2. Dispositif de refroidissement selon la revendication 1, dont la chambre de refroidissement (10) est réalisée comme une coque pressurisée inférieure (10) du teneur de moule (14) des moitiés de moule finisseur.

3. Dispositif de refroidissement selon la revendication 1 ou 2, dont la chambre de refroidissement (10) est reliée avec le teneur de moule (14) au moyen d'un boulon de teneur de moule monté d'un côté sur la chambre de refroidissement (10) et d'un autre côté sur le teneur de moule (10).

4. Dispositif de refroidissement selon la revendication 3, dont le boulon de teneur de moule (13) présente une bride de montage (15) du côté de chambre de refroidissement, laquelle est fixée au moyen de liaisons par vissage (17) sur la surface intérieure de la paroi supérieure (16) de la chambre de refroidissement (10).

5. Dispositif de refroidissement selon une des revendications 1 à 4, dans lequel le palier à joint à rotule (7) du côté de la chambre de refroidissement présente une plaque intermédiaire (12), qui forme au moins partiellement la paroi inférieure (9) de la chambre de refroidissement (10).

6. Dispositif de refroidissement selon une des revendications 1 à 5, dans lequel le tube télescopique (3) dépasse par son extrémité du côté de la chambre de refroidissement au moins partiellement dans la chambre de refroidissement (10).

7. Dispositif de refroidissement selon une des revendications 1 à 6, dans lequel l'insert d'air de refroidissement (18) positionné de manière flottante dépasse au moyen d'une protubérance à gradin (14) réalisée sur sa face supérieure dans une cavité de réception (25) réalisée sur la face inférieure (22) des moitiés de moule finisseur (2).

8. Dispositif de refroidissement selon une des revendications 1 à 7, dans lequel l'insert d'air de refroidissement (18) est maintenu au moyen de paliers à vis (23) sur la face supérieure de la paroi supérieure de la chambre de refroidissement (10), dans lequel ces paliers à vis (23) présentent suffisamment de jeu, de sorte que l'insert d'air de refroidissement (18) puisse être déplacé par rapport à la chambre de refroidissement (18) de manièree flottante dans une proportion prescrite.
